(19) Europäisches Patentamt | European Patent Office | Office européen des brevets

(11) **EP 3 738 741 A1**

(12) **EUROPEAN PATENT APPLICATION**
published in accordance with Art. 153(4) EPC

(43) Date of publication:
**18.11.2020 Bulletin 2020/47**

(21) Application number: **19738902.6**

(22) Date of filing: **11.01.2019**

(51) Int Cl.:
**B29C 44/00** (2006.01)　　**B29C 45/00** (2006.01)
**B29C 45/26** (2006.01)　　**B29C 45/70** (2006.01)
**B32B 5/18** (2006.01)

(86) International application number:
**PCT/JP2019/000719**

(87) International publication number:
**WO 2019/139130 (18.07.2019 Gazette 2019/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2018 JP 2018003440**

(71) Applicant: **Bando Chemical Industries, Ltd.**
**Kobe-shi, Hyogo 650-0047 (JP)**

(72) Inventors:
• **ICHIKI, Tomohito**
  **Kobe-shi, Hyogo 650-0047 (JP)**
• **AYUHA, Minoru**
  **Kobe-shi, Hyogo 650-0047 (JP)**
• **OKUNO, Yasumasa**
  **Kobe-shi, Hyogo 650-0047 (JP)**
• **MATSUMOTO, Saki**
  **Kobe-shi, Hyogo 650-0047 (JP)**

(74) Representative: **Reitstötter Kinzebach**
**Patentanwälte**
**Sternwartstrasse 4**
**81679 München (DE)**

(54) **FOAM MOLDED ARTICLE AND METHOD FOR PRODUCING FOAM MOLDED ARTICLE**

(57)　　The present invention provides a foam molded article having excellent shock resistance and inhibited from swelling, and a method for producing the foam molded article. The foam molded article according to the present invention has a bottom portion and a side face portion. The bottom portion has a cross-section including a first skin layer, a first foam layer, a belt-like resin layer, a second foam layer and a second skin layer in this order. The diameter of the bottom portion is 20 mm or more. The thickness of the bottom portion is 2.0 mm or more. The angle between the bottom portion and the side face portion is 40° or more and 89° or less. The foam molded article satisfies: $B/3 \leq A \leq 3B$, wherein A represents a length between an opposite surface of the bottom portion to a side where the side face portion is disposed and an upper end of the side face portion, and B represents the diameter of the bottom portion.

*FIG.5*

EP 3 738 741 A1

**Description**

TECHNICAL FIELD

The present invention relates to a foam molded article and a method for producing the foam molded article.

BACKGROUND ART

For example, a foam molded article is obtained by melting a resin composition, injecting the molten resin composition into a mold, and then foaming the molten resin. Weight reduction and cost saving can be achieved in such a foam molded article. In addition, the foam molded article can be also provided with adiabaticity. Therefore, such foam molded articles are used for various applications such as daily necessaries, household electric appliances, and foodstuff containers.

For example, Patent Literature 1 discloses a thermoplastic resin foam molded body which is a foam molded body including at least three kinds of layers, that is, a skin layer, a low foam layer and a high foam layer, wherein: the skin layer, the low foam layer and the high foam layer are composed of substantially one and the same thermoplastic resin; the skin layer has a porosity lower than 1%, the low foam layer has a porosity of 1% or higher and lower than 40%, and the high foam layer has a porosity of 40% or higher; a ratio (Da1/Da2) between a diameter (Da1) in a thickness direction of a bubble existing in the high foam layer near the low foam layer and a diameter (Da2) of the bubble in a direction perpendicular to the thickness direction is 1 to 4; and a ratio (Db1/Db2) between a diameter (Db1) in a thickness direction of a bubble near a center of the high foam layer in the thickness direction and a diameter (Db2) of the bubble in the direction perpendicular to the thickness direction is higher than 4 and 10 or lower

PROIR ART DOCUMENT

PATENT LITERATURE

Patent Literature 1: JP-A-2005-59224

SUMMARY OF INVENTION

PROBLEM TO BE SOLVED BY THE INVENTION

In recent years, heat resistance, strength, adiabaticity, etc. as well as a lightweight property have been required as performance of foam molded articles. The present inventor paid attention to a foam molded article having a foam layer and skin layers formed on opposite sides of the foam layer as a foam molded article having a lightweight property, heat resistance, strength and adiabaticity. However, the foam molded article having the foam layer and the skin layers is insufficient in shock resistance, and there is room for further examination.

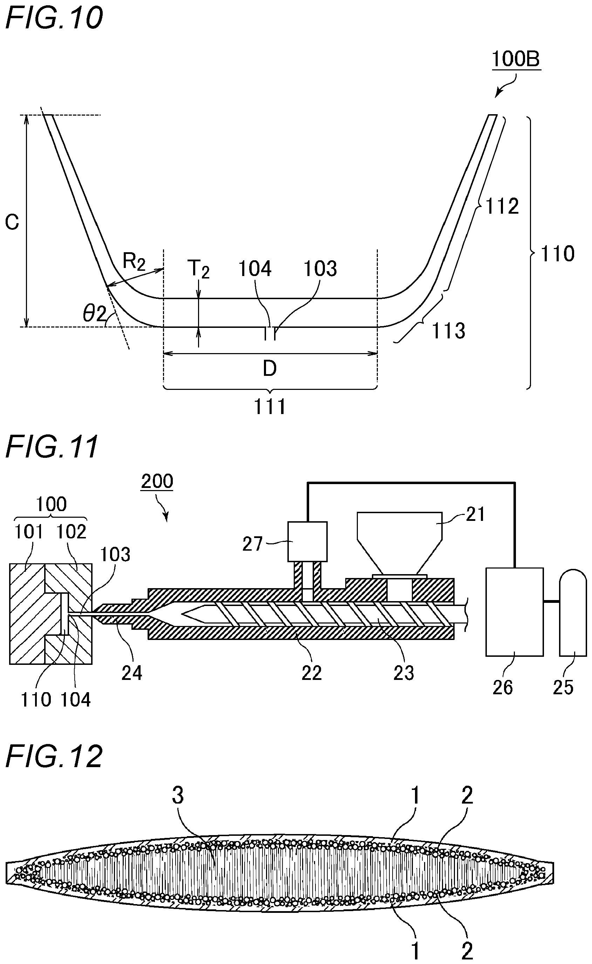

The present inventor performed various examinations in order to improve the shock resistance of foam molded articles. The present inventor found out that the shock resistance could be improved by a foam molded article having a five-layer structure including a first skin layer, a first foam layer, a belt-like resin layer, a second foam layer and a second skin layer in this order as a cross-sectional structure. However, in the foam molded article having the five-layer structure, the shock resistance could be improved while the foam molded article sometimes swelled largely at the center thereof. Fig. 12 is a cross-sectional view schematically showing the foam molded article swelling at the center. As shown in Fig. 12, the outer edge of the foam molded article was composed of the skin layers, but the foam layers and the belt-like resin layer were formed at the center of the foam molded article. Thus, the center swelled largely, and it was difficult to obtain a foam molded article controlled to have an intended thickness.

The present invention has been developed in consideration of the aforementioned circumstances. An object of the present invention is to provide a foam molded article having excellent shock resistance and inhibited from swelling, and a method for producing the foam molded article.

MEANS FOR SOLVING THE PROBLEM

The present inventor made examinations to inhibit the aforementioned swelling, and found that when a foam molded article is constituted by a bottom portion and a side face portion, swelling in the bottom portion can be inhibited. Further, the present inventor found that the swelling in the bottom portion can be inhibited effectively when the diameter of the bottom portion, the thickness of the bottom portion and the angle between the bottom portion and the side face portion are set within specified ranges, and the relationship between the diameter of the bottom portion and the length between the opposite surface of the bottom portion to the side where the side face portion is disposed and the upper end of the side face portion is set to satisfy specified conditions. Thus, due to the concept with which the aforementioned problem can be solved drastically, the present inventor arrived at the present invention.

Thus, an embodiment of the present invention is a foam molded article comprising a bottom portion and a side face portion, wherein: the bottom portion has a cross-section including a first skin layer, a first foam layer, a belt-like resin layer, a second foam layer and a second skin layer in this order; the bottom portion has a diameter of 20 mm or more; the bottom portion has a thickness of 2.0 mm or more; an angle between the bottom portion and the side face portion is 40° or more and 89° or less; and the following expression (1) is satisfied:

$$B/3 \leq A \leq 3B \qquad (1)$$

wherein A represents a length between an opposite surface of the bottom portion to a side where the side face portion is disposed and an upper end of the side face portion, and B represents the diameter of the bottom portion.

The foam molded article may further comprises a curved face portion that is provided between the bottom portion and the side face portion.

Another one embodiment of the present invention is a method for producing a foam molded article, comprising: a step of injecting a molten resin into a cavity inside a mold; and a step of moving a part of the mold to thereby expand a volume of the cavity before the molten resin injected into the cavity finishes to be solidified, wherein the cavity comprises a first region that molds a bottom portion of a foam molded article, and a second region that molds a side face portion of the foam molded article, and in the cavity whose volume has been expanded: the first region has a diameter of 20 mm or more; the first region has a thickness of 2.0 mm or more; an angle between the first region and the second region is 40° or more and 89° or less; and the following expression (2) is satisfied:

$$D/3 \leq C \leq 3D \qquad (2)$$

wherein C represents a length between an opposite surface of the first region to a side where the second region is disposed and an end portion of the second region, and D represents the diameter of the first region.

The cavity may further comprises a third region that forms a curved face portion of the foam molded article, the third region being provided between the first region and the second region.

EFFECT OF THE INVENTION

According to the present invention, it is possible to provide a foam molded article having excellent shock resistance and inhibited from swelling, and a method for producing the foam molded article.

BRIEF DESCRIPTION OF DRAWINGS

[Fig. 1] Fig. 1 is a perspective view schematically showing a first example of a foam molded article according to Embodiment 1.

[Fig. 2] Fig. 2 is a view schematically showing a cross-section including a line X-X' of the foam molded article shown in Fig. 1.

[Fig. 3] Fig. 3 is a cross-sectional view schematically showing a second example of the foam molded article according to Embodiment 1.

[Fig. 4] Fig. 4 is a perspective view schematically showing a third example of the foam molded article according to Embodiment 1.

[Fig. 5] Fig. 5 is a view schematically showing a cross-section including a line Z-Z' of the foam molded article shown in Fig. 4.

[Fig. 6] Fig. 6 is a cross-sectional view schematically showing a fourth example of the foam molded article according to Embodiment 1.

[Fig. 7] Fig. 7 is an enlarged view showing a cross-section including a line Y-Y' of the foam molded article shown in Figs. 2, 3, 5 and 6.

[Fig. 8] (a) of Fig. 8 is a schematic view for explaining a step of injecting a molten resin into a cavity inside a mold in a method for producing a foam molded article according to Embodiment 2, and (b) of Fig. 8 is a schematic view for explaining a core back step in the method for producing a foam molded article according to Embodiment 2.

[Fig. 9] Fig. 9 is a cross-sectional view schematically showing an example of a shape of the cavity inside the mold.

[Fig. 10] Fig. 10 is a cross-sectional view schematically showing another example of the shape of the cavity inside the mold.

[Fig. 11] Fig. 11 is a schematic view for explaining an example of a method for producing a foam molded article by use of a supercritical injection molding apparatus.

[Fig. 12] Fig. 12 is a cross-sectional view schematically showing a foam molded article swelling at a center thereof.

EMBODIMENTS FOR CARRYING OUT THE INVENTION

<Embodiment 1>

In Embodiment 1, a foam molded article according to the present invention will be described. The foam molded article shown in Embodiment 1 has a bottom portion and a side face portion. The bottom portion has a cross-section including a first skin layer, a first foam layer, a belt-like resin layer, a second foam layer and a second skin layer in this order. The bottom portion has a diameter of 20 mm or more. The bottom portion has a thickness of 2.0 mm or more. An angle between the bottom portion and the side face portion is 40° or more and 89° or less. The following expression (1) is satisfied:

$$B/3 \leq A \leq 3B \qquad (1)$$

where A represents a length between an opposite surface of the bottom portion to a side where the side face portion is disposed and an upper end of the side face portion, and B represents the diameter of the bottom portion.

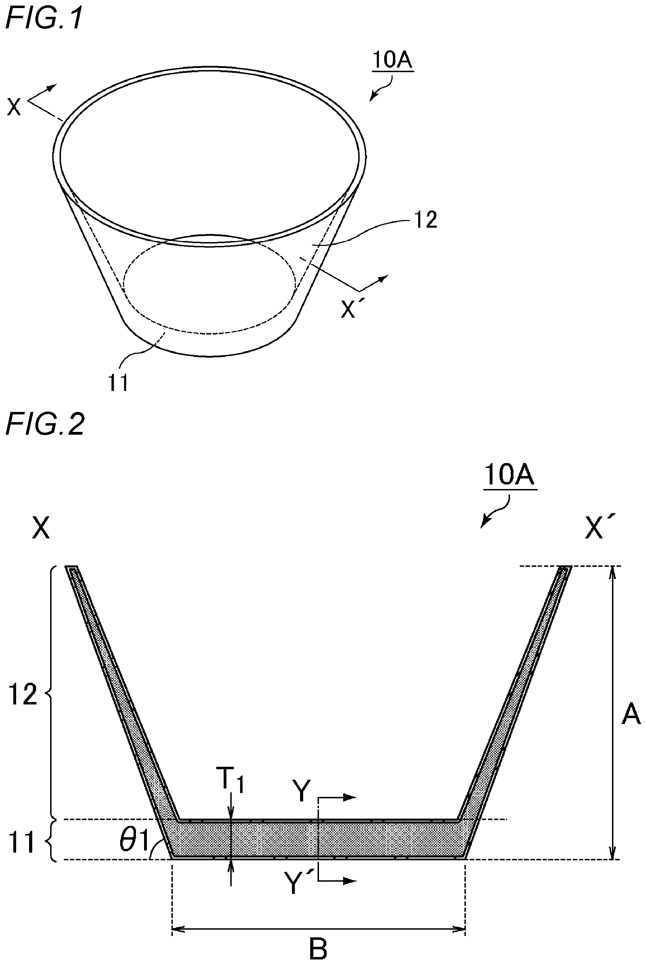

The overall shape of the foam molded article according to Embodiment 1 will be described below with reference to Fig. 1 and Fig. 2. Fig. 1 is a perspective view schematically showing a first example of the foam molded article according to Embodiment 1. Fig. 2 is a view schematically showing a cross-section including a line X-X' of the foam molded article shown in Fig. 1.

As shown in Fig. 1 and Fig. 2, the foam molded article 10A according to Embodiment 1 has a bottom portion 11 and a side face portion 12. A foam molded article in which the side face portion 12 is absent has an outer edge constituted by only the skin layers. Therefore, growth of foamed particles is impeded to inhibit formation of the foam layers and the belt-like resin layer in a thickness direction of the foam molded article. On the other hand, in a central portion of the foam molded article, growth of foamed particles is not impeded, but the foam layers and the belt-like resin layer grow in the thickness direction. Accordingly, as shown in Fig. 12, the foam molded article swells at the center. Thus, a foam molded article controlled to have an intended thickness cannot be obtained. When the side face portion 12 is disposed, the upper end of the side face portion 12 is constituted by the skin layers, but foamed particles can grow on the bottom portion 11 side of the side face portion 12. Thus, formation of the foam layers and/or the belt-like resin layer is not impeded. Therefore, when the side face portion 12 is disposed, formation of the foam layers and the belt-like resin layer is not impeded even at the outer edge of the bottom portion, so that foaming can be made uniform in the thickness direction all over the bottom portion.

An angle θ1 between the bottom portion 11 and the side face portion 12 is 40° or more and 89° or less. When the angle θ1 is smaller than 40°, the force with which the side face portion 12 suppresses the outer edge of the bottom portion 11 is too weak to inhibit swelling in the bottom portion 11 sufficiently. On the other hand, when the angle θ1 exceeds 89°, the side face portion 12 is disposed perpendicularly to the thickness direction of the bottom portion 11. Thus, growth of foamed particles is impeded at the outer edge of the bottom portion 11, so that formation of the foam layers and the belt-like resin layer is inhibited. In addition, it is difficult to extract the foam molded article from a mold. The lower limit of the angle θ1 is more preferably 45°, further more preferably 70°, and even more preferably 85°. The angle θ1 is an angle between a plane in contact with the bottom portion 11 and a straight line passing through the external surface (on the far side from the bottom portion) of the side face portion 12

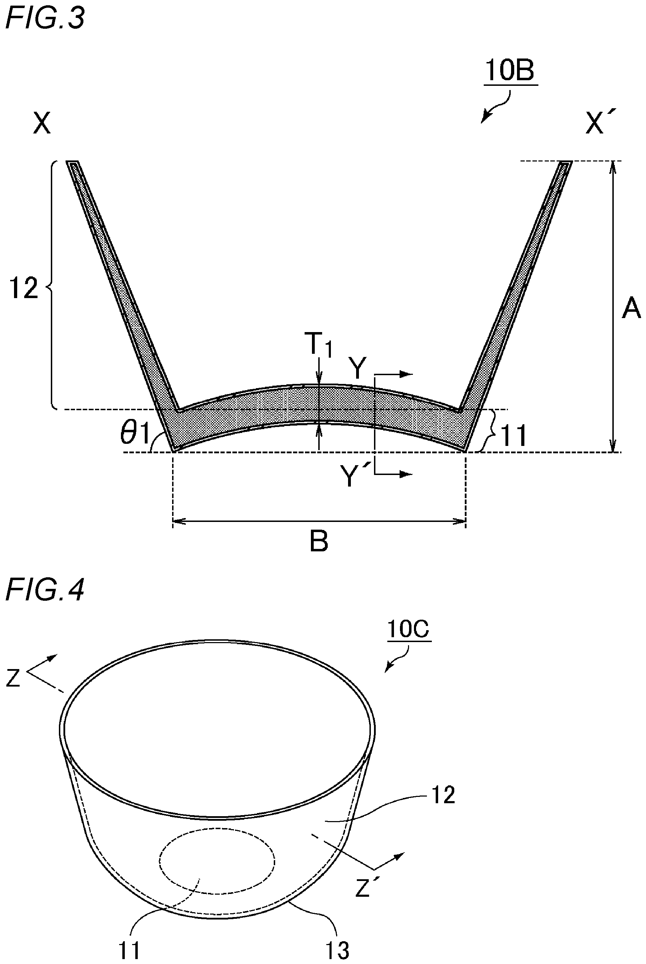

In the bottom portion 11, the opposite surface of the bottom portion 11 (hereinafter also referred to as a bottom surface of the bottom portion) to the side where the side face portion 12 is disposed may be a flat surface, or may be a curved surface curved on the side where the side face portion 12 is disposed. When the foam molded article according to the present invention stands still on a certain flat surface in the case where the bottom surface of the bottom portion 11 is a flat surface, the bottom surface of the bottom portion 11 is a part in contact with the certain flat surface. When the foam molded article according to the present invention stands still on a certain flat surface in the case where the bottom surface of the bottom portion 11 is a curved surface, the bottom surface of the bottom portion 11 includes an annular part in contact with the certain flat surface and an inside part surrounded by the annular part. The region of the face in contact with the certain flat surface or the region surrounded by the line in contact with the certain flat surface is also referred to as a "planar shape of the bottom portion". A foam molded article 10A shown in Fig. 1 and Fig. 2 is an example of a foam molded article in which the bottom surface of the bottom portion 11 is a flat surface. Fig. 3 is a cross-sectional view schematically showing a second example of the foam molded article according to Embodiment 1. A foam molded article 10B shown in Fig. 3 is an example of a foam molded article in which the bottom surface of the bottom portion 11 is a curved surface curved on the side where the side face portion 12 is disposed.

Examples of the planar shape of the bottom portion 11 include a circle, an ellipse, a polygon, a shape in which a plurality of arcs are combined (a gourd shape, a trefoil shape, a four-leave clover shape, etc.), and a shape in which arcs and straight lines are combined (a teardrop shape, a heart shape, etc.). Each angle of the polygon may be rounded.

A diameter B of the bottom portion 11 is 20 mm or more. When the diameter of the bottom portion 11 is below 20 mm, the foaming force in the bottom portion 11 is reduced so that the belt-like resin layer 3 cannot be formed. Therefore, a three-layer structure, that is, a skin-layer/foam-layer/skin-layer structure is formed in the bottom portion 11 so that the adiabaticity and the shock resistance are lowered. The upper limit of the diameter of the bottom portion 11 is, for example, 400 mm. When the diameter of the bottom portion 11 exceeds 400 mm, the distance between a resin injection port and the outer edge of the bottom portion 11 in injection molding is so long as to increase a difference in the timing when the molten resin is solidified. Therefore, for example, the side face portion 12 is solidified before the formation of the foam layers and the belt-like resin layer so that a wrinkle may be generated in the boundary between the side face portion 12 and the bottom portion 11 due to a difference in thickness. The lower limit of the diameter of the bottom portion 11 is more preferably 40 mm, and the upper limit thereof is more preferably 200 mm.

The diameter B of the bottom portion 11 is the maximum length of the bottom portion 11 in planar view. For example, when the planar shape of the bottom portion 11 is a circle, the diameter B of the bottom portion 11 is the diameter of the circle. When the planar shape of the bottom portion 11 is an ellipse, the diameter B of the bottom portion 11 is the long diameter of the ellipse. When the planar shape of the bottom portion 11 is a polygon such as a square, a rectangle or a rhombus, the diameter B of the bottom portion 11 is the longest diagonal line of the polygon.

A thickness $T_1$ of the bottom portion 11 is 2.0 mm or more. When the thickness $T_1$ of the bottom portion 11 is below 2.0 mm, sufficient foaming cannot be obtained, but a three-layer structure, that is, a skin-layer/foam-layer/skin-layer structure is formed in the bottom portion 11 so that the adiabaticity and the shock resistance are lowered. The thickness $T_1$ is preferably 15.0 mm or less. When the thickness $T_1$ is too large, deformation may increase due to lowering in strength. The lower limit of the thickness $T_1$ is preferably 3.0 mm, and more preferably 4.0 mm, and the upper limit thereof is more preferably 13.0 mm, and even more preferably 10.0 mm. The thickness $T_1$ of the bottom portion 11 is a thickness between the external surface of the first skin layer (the opposite surface of the first skin layer to the first foam layer) and the external surface of the second skin layer (the opposite surface of the second skin layer to the second foam layer). An average value of the thickness of the bottom portion 11 may be used as the thickness $T_1$ of the bottom portion 11. In the bottom portion 11, a difference in thickness between the thickness part and the thinnest part is preferably less than 1.0 mm, and more preferably less than 0.6 mm.

The foam molded article according to Embodiment 1 satisfies the following expression (1) when A represents a length between the opposite surface of the bottom portion 11 to the side where the side face portion 12 is disposed and the upper end of the side face portion 12, and B represents the diameter of the bottom portion 11. To say other words, the length A is a height between a part in contact with a certain flat surface and the upper end of the side face portion 12 in the state where the foam molded article stands still on the certain flat surface.

$$B/3 \leq A \leq 3B \qquad (1)$$

When B/3>A, the height of the side face portion 12 is too small to sufficiently form the foam layers and the belt-like resin layer at the outer edge of the bottom portion 11. Thus, foaming cannot be made uniform in the thickness direction all over the bottom portion 11. On the other hand, when A>3B, the height of the side face portion 12 is so large as to increase a difference in the timing when the molten resin is solidified, between the bottom 11 side part of the side face portion 12 and the upper end of the side face portion 12. Therefore, a wrinkle or the like may be generated in the surface of the side face portion 12. When the height of the side face portion 12 is not constant, the aforementioned value A is within the range of the aforementioned expression (1) all over the circumference of the side face portion 12.

The side face portion 12 is preferably disposed all over the circumference of the outer edge of the bottom portion 11. When the side face portion 12 is disposed all over the circumference of the outer edge of the bottom portion 11, swelling at the center of the bottom portion 11 can be inhibited more effectively. Fig. 1 shows an example of the case in which the planar shape of the bottom portion is a circle, and the side face portion 12 is disposed all over the circumference of the outer edge of the bottom portion 11. The outer edge of the bottom portion 11 is the outer circumference of the bottom portion 11 when the bottom portion 11 is viewed in plane. For example, when the planar shape of the bottom portion 11 is a circle or an ellipse, the outer edge of the bottom portion 11 is the circumference thereof. When the planar shape of the bottom portion 11 is a square, a rectangle or a rhombus, the outer edge of the bottom portion 11 is the four sides thereof.

The side face portion 12 is preferably disposed on either the first skin layer side or the second skin layer side of the bottom portion 11. To say other words, the side face portion 12 is preferably disposed on only one side of the bottom portion 11. Figs. 1 to 3 show the case where the side face portion 11 is disposed on only the first skin layer side of the bottom portion 11. The cross-sectional shape of the side face portion 12 preferably includes a straight line.

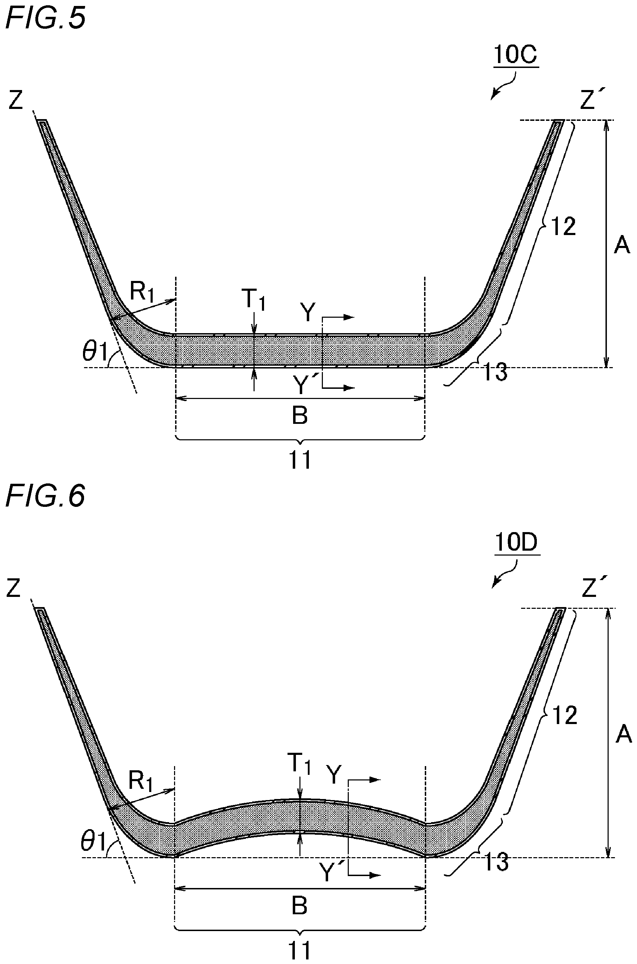

Further, a curved face portion 13 may be provided between the bottom portion 11 and the side face portion 12. When the curved face portion 13 is provided, the foam layers and the belt-like resin layer can be formed easily even at the outer edge of the bottom portion 11. Thus, foaming can be made more uniform in the thickness direction all over the bottom portion 11. Fig. 4 is a perspective view schematically showing a third example of the foam molded article according to Embodiment 1. Fig. 5 is a view schematically showing a cross-section including a line Z-Z' of the foam molded article shown in Fig. 4. A foam molded article 10C shown in Fig. 4 and Fig. 5 is an example of a foam molded article in which the curved face portion 13 is provided, and the bottom surface of the bottom portion 11 is a flat surface. Fig. 6 is a cross-sectional view schematically showing a fourth example of the foam molded article according to Embodiment 1. A foam molded article 10D shown in Fig. 6 is an example of a foam molded article in which the curved portion 13 is provided, and the bottom surface of the bottom portion 11 is a curved surface curved on the side where the side face portion 12 is disposed.

A curvature radius $R_1$ of the curved face portion 13 is preferably 10 mm or more and 50 mm or less. The curvature radius $R_1$ is a curvature radius of the outside external surface of the curved face portion 13. In Fig. 5 and Fig. 6. the curvature radius $R_1$ is a curvature radius of the external surface of the second skin layer.

The foam molded article according to Embodiment 1 can be, for example, used as a casing body (housing) of equipment or the like, a protective cover, a dish-like vessel, a foodstuff vessel, a tray for conveyance, etc.

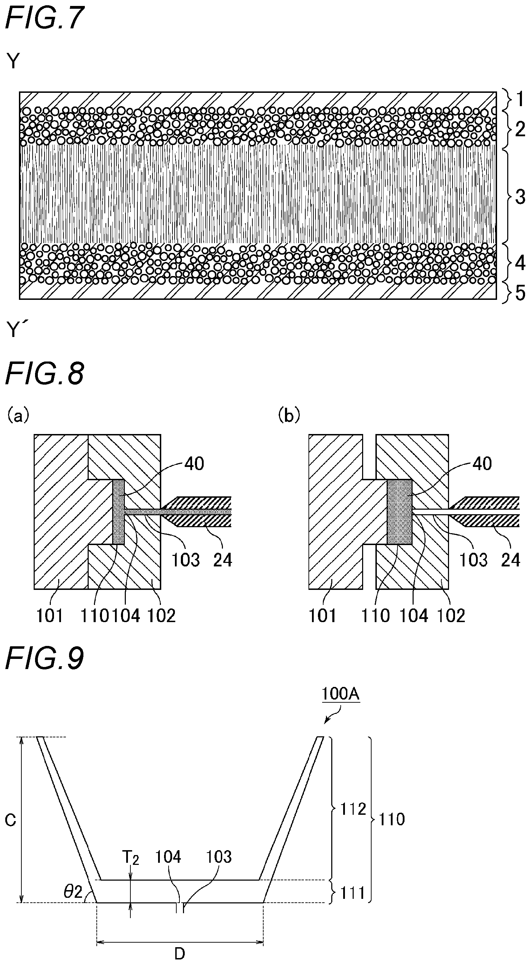

A cross-sectional structure of the foam molded article according to Embodiment 1 will be described below with reference to Fig. 7. Fig. 7 is an enlarged view showing a cross-section including a line Y-Y' of the foam molded article shown in Figs. 2, 3, 5 and 6. As shown in Fig. 7, the bottom portion 11 of the foam molded article according to Embodiment 1 has a cross-section including a first skin layer 1, a first foam layer 2, a belt-like resin layer 3, a second foam layer 4 and a second skin layer 5 in this order. The foam molded article according to Embodiment 1 has high strength because the external surface thereof is covered with the first and second skin layers 1 and 5. In addition, due to the first and second foam layers 2 and 4 and the belt-like resin layer 3 provided therein, the foam molded article according to Embodiment 1 is light in weight and excellent in adiabaticity. Further, due to the belt-like resin layer 3 provided therein, the foam molded article according to Embodiment 1 is excellent in shock resistance. Due to such a five-layer structure, the foam molded article according to Embodiment 1 is light in weight and excellent in adiabaticity and shock resistance. In the present description, a cross-section of a foam molded article is a cross-section in a thickness direction of the foam molded article.

The first and second skin layers 1 and 5 are layers forming the external surfaces of the foam molded article according to Embodiment 1. In the following description, any skin layer designates a region where substantially no bubble (foamed particle) is included in resin. The density of the first and second skin layers 1 and 5 is, for example, 0.85 to 1.6 g/cm$^3$. Due to the first skin layer 1 and the second skin layer 5 provided in the opposite sides, the foam molded article according to Embodiment 1 has high strength and adiabaticity.

The thickness of the first and second skin layers 1 and 5 is, for example, 50 μm to 550 μm. When the thickness of the first and second skin layers 1 and 5 is below 50 μm, the strength of the foam molded article may be insufficient. On the contrary, when the thickness of the first and second skin layers 1 and 5 exceeds 550 μm, there is a fear that sufficient shock resistance cannot be obtained. The thickness of the skin layers can be measured by use of a scanning electron microscope (SEM). For example, "S-4800" made by Hitachi High-Tech Corporation or the like can be used as the scanning electron microscope.

The first skin layer 1 and the second skin layer 5 may have the same density and the same thickness or may have different densities and different thicknesses.

The first and second foam layers 2 and 4 designate regions where a large number of bubbles (foamed particles) are included in resin. The density of the foam layers is, for example, 0.65 g/cm$^3$ or lower. Due to the first and second foam layers 2 and 4 existing internally, the foam molded article according to Embodiment 1 can be reduced in weight. In addition, heat is hardly transmitted. Thus, the foam molded article according to Embodiment 1 is also excellent in adiabaticity.

The first and second foam layers 2 and 4 preferably include foamed particles whose average particle size is 20 μm to 700 μm. When the average particle size is below 20 μm, the belt-like resin layer 3 is hardly formed. Thus, there is a fear that sufficient shock resistance cannot be obtained. On the contrary, when the average particle size exceeds 700 μm, there is a fear that sufficient strength cannot be obtained. The foamed particles are preferably closed cells where each foamed particle is surrounded by resin. The average particle size of the foamed particles is an average particle size of 100 foamed particles selected at random in observation of a cross-section of each of the first and second foam layers 2 and 4 of the foam molded article. The particle size of each foamed particle can be measured by a scanning electron microscope. In the foam molded article according to Embodiment 1, when a cross-section thereof is observed, preferably 100 or more foamed particles are included in a 1 mm × 1 mm region of each foam layer.

The thickness of the first and second foam layers 2 and 4 is, for example, 100 $\mu$m to 10 mm. When the thickness of the foam layers is below 100 $\mu$m, the adiabaticity of the foam molded article may be insufficient. On the contrary, when the thickness of the foam layers exceeds 10 mm, the strength of the foam molded article may be insufficient. The thickness of the foam layers can be measured by use of a scanning electron microscope.

The first foam layer 2 and the second foam layer 4 may have the same density, the same average particle size and the same thickness or may have different densities, different average particle sizes and different thicknesses.

The belt-like resin layer 3 is a layer in which resin is formed into a belt-like shape (fibrous shape). A plurality of pieces of belt-like resin constituting the belt-like resin layer 3 make a bridge between the first foam layer 2 and the second foam layer 4 disposed with the belt-like resin layer 3 therebetween, so that the shock resistance of the foam molded article according to Embodiment 1 can be improved. In addition, the belt-like resin layer 3 couples the first skin layer 1 and the first foam layer 2 with the second foam layer 4 and the second skin layer 5. Therefore, if destaticization is performed only on either the external surface of the first skin layer or the external surface of the second skin layer 5, static electricity can be eliminated from the entire surface of the foam molded article including the destaticized external surface and the external surface on the opposite side thereto. Thus, productivity is improved. Examples of the destaticization include a method using an ionizer, a method using an antistatic brush, and a method of performing corona discharge.

The plurality of pieces of belt-like resin included in the belt-like resin layer 3 preferably extend in a substantially fixed direction. The belt-like resin preferably has an angle of 90°±45° with respect to the external surface of the foam molded article. The external surface is the opposite surface of the first skin layer 1 to the first foam layer 2 or the opposite surface of the second skin layer 5 to the second foam layer 4. For example, when the bottom surface of the bottom portion 11 of the foam molded article is a flat surface, the belt-like resin preferably has an angle of about 90° with respect to the external surface of the foam molded article in the bottom portion. Incidentally, the angle of the belt-like resin with respect to the external surface of the foam molded article is an average angle of pieces of the belt-like resin included in the belt-like resin layer 3 within a range of 200 $\mu$m × 200 $\mu$m.

The cross-sectional structure of the side face portion 12 of the foam molded article according to Embodiment 1 is not particularly limited, but the external surface is preferably a skin layer. The side face portion 12 may have a cross-section including the first skin layer 1, the first foam layer 2, the belt-like resin layer 3, the second foam layer 4 and the second skin layer 5 in this order.

When the foam molded article has the curved face portion 13, the cross-sectional structure of the curved face portion 13 is not particularly limited, but the external surface is preferably a skin layer. The curved face portion 13 may have a cross-section including the first skin layer 1, the first foam layer 2, the belt-like resin layer 3, the second foam layer 4 and the second skin layer 5 in this order.

The foam molded article according to Embodiment 1 is preferably a foam injection-molded article obtained by injection molding of a resin composition. The resin composition is not particularly limited, but preferably contains a thermoplastic resin as its major component. Examples of the thermoplastic resin include propylene resin (PP), polyolefin such as polyethylene, polylactic acid (PLA), polystyrene (PS), polyphenylene ether (PPE), polybutylene succinate (PBS), polybutylene succinate adipate (PBSA), polycaprolactone (PCL), polyacetal (POM), and polyamide (PA). Each of those may be used alone, or two or more kinds of them may be used together. Among them, polypropylene, polylactic acid, polybutylene succinate, etc. are preferred. The content of the thermoplastic resin relative to the whole of the resin composition is, for example, 50% by weight or higher.

The resin composition preferably contains two or more kinds of thermoplastic resins, and at least one kind of them is more preferably a crystalline polymer. Due to the crystalline polymer contained therein, in injection molding of molten resin obtained by melting the resin composition, gas derived from a chemical foaming agent or a supercritical fluid is hardly released from the molten resin. Thus, the foam molded article can be obtained at a high expansion ratio with a reduced foaming agent. The crystalline polymer may be a polymer having a clear melting peak in differential scanning calorimetry. Examples of the crystalline polymer include polypropylene (PP), polylactic acid (PLA), polyamide (PA), and polyacetal.

The thermoplastic resin may further contain acid-modified polyolefin or the like. Examples of the acid-modified polyolefin include ones obtained by addition reaction of unsaturated carboxylic acid, ester of unsaturated carboxylic acid or anhydride of unsaturated carboxylic acid to polyolefin. Examples of the unsaturated carboxylic acid include maleic acid, fumaric acid, and itaconic acid. Examples of the ester of unsaturated carboxylic acid include monomethyl maleate ester, monoethyl maleate ester, diethyl maleate ester, and monomethyl fumarate ester. Examples of the anhydride of unsaturated carboxylic acid include itaconic anhydride, and maleic anhydride. Examples of the acid-modified polyolefin include polyolefin modified with maleic anhydride such as polypropylene modified with maleic anhydride or polyethylene modified with maleic anhydride, polyolefin modified with glycidyl methacrylate, etc. Each of the acid-modified polyolefins may be used alone, or two or more kinds of them may be used together.

The resin composition may contain layered silicate such as talc, mica or montmorillonite, and a filler such as calcium carbonate, glass fiber or cellulose fiber, in addition to the aforementioned thermoplastic resin.

A mixture of polyolefin, polylactic acid and acid-modified polyolefin is preferably used as the resin composition. The polyolefin and the polylactic acid are incompatible polymers which are not dissolved in each other. Therefore, even when mixed with each other, they are not dissolved in each other but an interface is formed therebetween. Thus, the interface can be used as a foaming origin (foaming nucleus) in foaming using a supercritical fluid. On the other hand, in order to produce a foam molded article in which foaming has been made uniform, the resin composition which has not been foamed yet has to be dispersed uniformly. To this end, the acid-modified polyolefin is added to compatibilize the polyolefin and the polylactic acid to thereby improve dispersibility. Thus, a large number of minute bubbles (foamed particles having a small particle size) can be provided uniformly inside the foam molded article. In this manner, a foam molded article excellent in properties such as adiabaticity, strength and lightness in weight can be produced.

The surface or the like of the foam molded article may be subjected to decoration of patterns, colors, characters, etc. When such decoration is performed, a pigment filler, a color master batch, etc. may be added to the resin composition.

<Embodiment 2>

In Embodiment 2, a method for producing a foam molded article according to the present invention will be described. The method for producing a foam molded article shown in Embodiment 2 includes a step of injecting a molten resin into a cavity inside a mold; and a step (hereinafter also referred to as a "core back step") of moving a part of the mold to thereby expand a volume of the cavity before the molten resin injected into the cavity finishes to be solidified. The cavity includes a first region that molds a bottom portion of a foam molded article, and a second region that molds a side face portion of the foam molded article. In the cavity whose volume has been expanded, the first region has a diameter of 20 mm or more, the first region has a thickness of 2.0 mm or more, an angle between the first region and the second region is 40° or more and 89° or less, and the following expression (2) is satisfied:

$$D/3 \leq C \leq 3D \qquad (2)$$

where C represents a length between an opposite surface of the first region to a side where the second region is disposed and an end portion of the second region, and D represents the diameter of the first region.

The method for producing a foam molded article according to Embodiment 2 will be described below with reference to Fig. 8. (a) of Fig. 8 is a schematic view for explaining the step of injecting the molten resin into the cavity inside the mold in the method for producing a foam molded article according to Embodiment 2, showing a state before core back. (b) of Fig. 8 is a schematic view for explaining the core back step in the method for producing a foam molded article according to Embodiment 2, showing a state after the core back.

In the step of injecting the molten resin into the cavity inside the mold, the molten resin is injected into the cavity through a resin injection port provided in the mold. As shown in (a) of Fig. 8, a molten resin 40 injected from a nozzle 24 of an injection molding apparatus passes through a runner 103 and is injected into a cavity 110 through a resin injection port 104 of the mold.

The mold typically includes a male mold 101 having a convex shape and a female mold 102 having a concave shape. A gap formed in the state where the male mold 101 and the female mold 102 are fitted to each other serves as the cavity 110 to which the molten resin 40 will be injected. At least a part of the male mold 101 and/or the female mold 102 is preferably movable in a direction to increase the volume of the cavity. The resin injection port 104 may be provided in either the male mold 101 or the female mold 102.

For example, a resin composition containing a foaming agent and a resin composition can be used as the molten resin 40. As the resin composition, the resin composition which has been described as the composition of the foam molded article by way of example can be used.

As the foaming agent, a chemical foaming agent may be used, or a physical foaming agent may be used. The chemical foaming agent and the physical foaming agent may be used together. Examples of the chemical foaming agent include sodium hydrogen carbonate, dinitrosopentamethylenetetramine (DTP), and azodicarbonamide (ADCA). A supercritical fluid may be, for example, used as the physical foaming agent. Examples of the supercritical fluid include supercritical fluids of inactive gases such as carbon dioxide, nitrogen, argon, helium, etc. Among them, a supercritical fluid of carbon dioxide or nitrogen is preferred. The supercritical fluid of nitrogen is more preferred due to its excellent foamability.

The aforementioned injection molding is preferably supercritical injection molding in which a molten resin 40 containing a supercritical fluid and a resin composition is injection-molded. For example, a resin composition melted and impregnated with a supercritical fluid is used as the molten resin 40. The molten resin 40 is preferably a single-phase melt of a resin composition and a supercritical fluid. Such a molten resin 40 can be produced as follows. That is, a supercritical fluid produced by a supercritical fluid generator known in the background art is injected into a molten resin composition under high pressure, and further stirred.

Fig. 9 is a cross-sectional view schematically showing an example of the shape of the cavity inside the mold. A mold 100A is an example of the mold for producing the foam molded article 10A shown in Fig. 1 and Fig. 2. A cavity 110 includes a first region 111 for molding the bottom portion 11 of the foam molded article 10A, and a second region 112 for molding the side face portion 12 of the foam molded article 10A. The shape of the foam molded article 10A is defined by the shape of the cavity 110 of the mold 100A afore core back (after the expansion of the volume).

In the cavity 110 before the expansion of the volume, a diameter D of the first region 111 is preferably 20 mm or more.

In the cavity 110 before the expansion of the volume, a thickness $T_2$ of the first region 111 is preferably 0.4 mm or more, and more preferably 0.6 mm or more. In order to improve the appearance of the foam molded article 10A obtained therefrom, the thickness $T_2$ is preferably 4.0 mm or less, more preferably 3.5 mm or less, even more preferably 3.0 mm or less, and particularly preferably 2.5 mm or less. When the thickness $T_2$ of the first region 111 before the expansion of the volume is thick, the solidification rate of the molten resin 40 inside the cavity 110 is lowered. In addition, due to increase in foaming gas amount and foaming pressure, a minute bulge or a minute wrinkle may occur in the surface of the foam molded article 10A. The minute bulge or wrinkle causes a poor appearance in a surface portion of the skin layer. The poor appearance is different from "swelling" caused by a difference in growth amount of foamed particles between an end portion and a central portion of the bottom portion 11.

In the cavity 110 before the expansion of the volume, an angle θ2 between the first region 111 and the second region 112 is preferably 40° or more and 89° or less.

In the cavity 110 before the expansion of the volume, it is preferable that the following expression (3) is satisfied:

$$D/3 \leq C \leq 3D \qquad (3)$$

where C represents a length between an opposite surface of the first region 111 to a side where the second region 112 is disposed and an end portion of the second region 112, and D represents the diameter of the first region.

In the step (core back step) in which a part of the mold is moved to expand the volume of the cavity before the molten resin 40 injected into the cavity 110 finishes to be solidified, for example, as shown in (b) of Fig. 8, the male mold 101 is moved back before the advance of the cooling and solidification of the molten resin 40, so that the cavity 110 is expanded to accelerate reduction in pressure to thereby accelerate foaming of the molten resin 40 inside the cavity 110. Due to the loss of pressure in the mold, phase transition to gas occurs in the supercritical fluid as soon as the pressure reaches a critical pressure thereof. Thus, bubbles are generated in the molten resin 40. In the core back step, when the cavity 110 is forcibly expanded in the stat where a part or all of the molten resin is melted, sudden reduction in pressure can be generated to increase the foaming amount on a large scale. In this manner, bubbles can be formed all over the inside of the molten resin 40 injected into the cavity 110.

To expand the volume of the cavity 110, at least a part of the male mold 101 and/or the female mold 102 is moved. In such a case that the male mold 101 is movable and the female mold 102 is fixed, it is preferable that the whole of the male mold 101 is moved to expand the volume of the cavity 110. The moving direction of the male mold 101 and/or the female mold 102 is substantially the same as the extending direction of a plurality of pieces of belt-like resin included in the belt-like resin layer 3.

The shape of the cavity 110 after the core back (after the expansion of the volume) defines the shape of the foam molded article 10A. Accordingly, the diameter D of the first region 111 in Fig. 9 is as large as the diameter B shown in Fig. 2, and the thickness $T_2$ of the first region 111 is as large as the thickness $T_1$ shown in Fig. 2. The length C between the opposite surface of the first region 111 to the side where the second region 112 is disposed and the end portion of the second region 112 is as large as the height A shown in Fig. 2, and the angle θ2 between the first region 111 and the second region 112 is as large as the angle θ1 shown in Fig. 2.

In the cavity 110 after the expansion of the volume, the diameter D of the first region 111 is 20 mm or more. When the diameter D of the first region 111 is below 20 mm, the foaming force in the bottom portion 11 is reduced so that the belt-like resin layer 3 cannot be formed. Therefore, a three-layer structure, that is, a skin-layer/foam-layer/skin-layer structure is formed so that the adiabaticity and the shock resistance are lowered. The upper limit of the diameter D of the first region 111 is, for example, 400 mm. When the diameter D of the first region 111 exceeds 400 mm, the distance between the resin injection port 104 and the end portion of the second region 112 in injection molding is so long as to increase a difference in the timing when the molten resin 40 is solidified. Therefore, for example, the first and second skin layers 1 and 5 in the side face portion 12 are solidified before the formation of the first and second foam layers 2 and 4 and the belt-like resin layer 3 so that a wrinkle may be generated in the boundary between the bottom portion 11 and the side face portion 12 due to a difference in thickness. The lower limit of the diameter D of the first region 111 is more preferably 40 mm, and the upper limit thereof is more preferably 200 mm. The diameter D of the first region 111 after the expansion of the volume is the maximum length of the first region 111 after the expansion of the volume in planar view. The diameter D of the first region 111 after the expansion of the volume is the maximum length of the opposite surface to the side where the second region 112 is disposed. The diameter D of the first region 111 after the expansion of the volume corresponds to the diameter B of the bottom portion 11 of the foam molded article.

In the cavity 110 after the expansion of the volume, the thickness $T_2$ of the first region 111 is 2.0 mm or more. When the thickness $T_2$ is below 2.0 mm, sufficient foaming cannot be obtained, but a three-layer structure, that is, a skin-layer/foam-layer/skin-layer structure is formed in the foam molded article so that the adiabaticity and the shock resistance are lowered. The thickness $T_2$ is preferably 15.0 mm or less. When the thickness $T_2$ exceeds 15.0 mm, the surface of the bottom portion 11 of the foam molded article obtained therefrom may be wavy to deteriorate the appearance. In addition, when the thickness $T_2$ is too large, the solidification rate of the molten resin 40 inside the cavity 110 is lowered. In addition, due to increase in foaming gas amount and foaming pressure, a minute bulge or a minute wrinkle may occur in the surface of the foam molded article. The lower limit of the thickness $T_2$ is preferably 3.0 mm, and more preferably 4.0 mm, and the upper limit thereof is more preferably 13.0 mm, and even more preferably 10.0 mm. The thickness $T_2$ of the first region 111 after the expansion of the volume is the thickness $T_2$ of the first region 111 after the expansion of the volume, corresponding to the thickness $T_1$ of the bottom portion 11 of the foam molded article.

The resin injection port 104 is preferably disposed in the first region 111, and more preferably disposed at the center of the first region 111. When the resin injection port 104 is disposed in the first region 111, the obtained foam molded article has an impression of the resin injection port 104 in the bottom portion 11.

In the cavity 110 after the expansion of the volume, an angle θ2 between the first region 111 and the second region 112 is 40° or more and 89° or less. When the angle θ2 is smaller than 40°, the force with which the side face portion 12 in the foam molded article obtained therefrom suppresses the outer edge of the bottom portion 11 is too weak to inhibit swelling in the bottom portion 11 sufficiently. On the other hand, when the angle θ2 exceeds 89°, the side face portion 12 is disposed perpendicularly to the thickness direction of the first region 111 so that the growth of foamed particles in the obtained foam molded article is impeded at the outer edge of the bottom portion 11. Thus, formation of the first and second foam layers 2 and 4 and the belt-like resin layer 3 is inhibited. In addition, it is difficult to extract the foam molded article from the mold. The lower limit of the angle θ2 is more preferably 45°, and further more preferably 70°, and the upper limit thereof is more preferably 85°. The angle θ2 between the first region 111 and the second region 112 corresponds to the angle θ1 between the bottom portion 11 and the side face portion 12 in the foam molded article.

The method for producing a foam molded article according to Embodiment 2 satisfies the following expression (2) when C represents a length between the opposite surface of the first region 111 to the side where the second region 112 is disposed and the end portion of the second region 112, and D represents the diameter of the first region 111. The end portion of the second region 112 is the opposite end portion to the side where the first region 111 is disposed, correspondingly to the upper end of the side face portion 12 in the foam molded article.

$$D/3 \leq C \leq 3D \qquad (2)$$

When D/3>C, the height of the second region 112 is too small to sufficiently form the first and second foam layers 2 and 4 and the belt-like resin layer 3 at the outer edge of the first region 111. Thus, foaming cannot be made uniform in the thickness direction all over the bottom portion 11 in the obtained foam molded article. On the other hand, when C>3D, the height of the second region 112 is so large as to increase a difference in the timing when the molten resin 40 is solidified, between the first region 111 side part of the second region 112 and the opposite end portion to the first region 111. Therefore, a wrinkle or the like may be generated in the surface of the side face portion 12.

The second region 112 is preferably disposed all over the circumference of the outer edge of the first region 111. When the second region 112 is disposed all over the circumference of the outer edge of the first region 111, swelling at the center of the bottom portion 11 in the obtained foam molded article can be inhibited more effectively.

Further, the cavity 110 may include a third region 113 between the first region 111 and the second region 112. The third region 113 forms the curved face portion 13 in the foam molded article. Fig. 10 is a cross-sectional view schematically showing another example of the shape of the cavity in the mold. A mold 100B is an example of the mold for producing the foam molded article 10C shown in Fig. 4 and Fig. 5.

A curvature radius $R_2$ of the third region 113 is preferably 10 mm or more and 50 mm or less. The curvature radius $R_2$ is a curvature radius of the female mold 102 in the third region 113.

The core back is preferably started immediately after the completion of injection of the molten resin 40 into the cavity 110 (0 second after the completion of the injection) or within 5 seconds after the completion of the injection. The moving speed (core back speed) of the mold is preferably 0.5 mm/sec or lower. The lower limit of the core back speed is not particularly limited as long as the thickness $T_2$ of the first region 111 can be set to a desired thickness until the molten resin 40 is solidified. For example, the lower limit of the core back speed is 0.1 mm/sec. The expansion amount (core back amount) of the distance of the gap in the mold caused by the core back is preferably 0.5 mm to 10 mm. Incidentally, for the foam molding, the foam molded article may be contracted even after the core back if the skin layers which have not been perfectly solidified are so soft as to be pushed excessively by the internal foaming pressure. In addition, gas generated by phase transition of the supercritical fluid contained in the molten resin 40 may stay between the mold and the molten resin 40 to thereby impede the growth of the first and second foam layers 2 and 4 and the belt-like resin layer 3. Therefore, there is a case that the total amount of the thickness of the cavity 110 before the core back and the core back amount does not coincide with the thickness of the cavity 110 after the core back, and the size of the foam molded article.

The thicknesses of the bottom portion 11, the side face portion 12 and the curved face portion 13 and the expansion ratios of the respective portions have influence on the adiabaticity of the obtained foam molded article. As the thickness of the foam molded article increases and the expansion ratio thereof increases, the adiabaticity of the foam molded article is improved. The expansion ratio (%) is, for example, expressed by (thickness $T_2$ of first region 111 after core back) / (thickness $T_2$ of first region 111 before core back) $\times$ 100. As for the thickness of the foam molded article, the thickness of the bottom portion 11 is, for example, preferably 5 mm or more. The expansion ratio is preferably 400% or higher. It is more preferable that the thickness of the bottom portion 11 is 5 mm or more, and the expansion ratio is 400% or higher.

The method for producing a foam molded article according to Embodiment 2 may include a step of melting a resin composition and impregnating the resin composition with a supercritical fluid to thereby prepare a molten resin. Preparing the molten resin containing the supercritical fluid and the resin composition and molding the molten resin while foaming it can be, for example, performed by a supercritical injection molding apparatus in which an injection molding machine and a supercritical fluid generator are coupled with each other. For example, a Mucell injection molding machine ("Mucell" is a registered trademark of Trexel, Inc.) can be used as the supercritical injection molding apparatus.

Fig. 11 is a schematic view for explaining an example of the method for producing a foam molded article by use of the supercritical injection molding apparatus. In a supercritical injection molding apparatus 200 shown in Fig. 11, a supercritical fluid generator having a gas cylinder 25, a supercritical fluid generating portion 26 and an injection control portion 27 is coupled with an injection molding machine having a hopper 21, a heating cylinder 22, a screw 23 and a nozzle 24.

The hopper 21 has a vessel for storing a resin material thrown therein. The hopper 21 makes a moderate amount of the resin material fall into the heating cylinder 22 through a closable opening portion at the bottom portion of the vessel. As the resin material to be thrown into the hopper 21, a pellet of a resin composition may be produced by melting and kneading a mixture of a plurality of kinds of raw materials by use an extruder. The extruder is not particularly limited, but various single-axis or multi-axis extruders may be used. For example, a two-axis extruder having a set temperature of 200°C or higher is preferred. As a kneading method, all the raw materials may be kneaded together, or desired ones of the raw materials may be kneaded and the remaining raw materials may be then added and kneaded. The heating cylinder 22 can heat the inside of a cylindrical space thereof so that the resin material can be melted.

Inactive gas serving as a raw material of the supercritical fluid is enclosed in the gas cylinder 25. The inactive gas is sent from the gas cylinder 25 to the supercritical fluid generating portion 26 to be thereby formed as a supercritical fluid. The supercritical fluid is thrown into the heating cylinder 22 from the supercritical fluid generating portion 26 through the injection control portion 27. In the injection control portion 27, the injection amount of the supercritical fluid relative to the resin material melted in the heating cylinder 22 is controlled.

The screw 23 is configured to be able to move while rotating inside the heating cylinder 22. The screw 23 extrudes the molten resin material and the supercritical fluid toward the tip of the heating cylinder 22 while mixing them. Due to the mixture, a single-phase melt (molten resin containing the supercritical fluid) of the molten resin material and the supercritical fluid is formed. The molten resin containing the supercritical fluid is extruded by the screw 23 to be thereby conveyed toward the nozzle 24. The molten resin containing the supercritical fluid is injected from the nozzle 24 to the mold 100 continuously by a moderate amount.

Further in the method for producing a foam molded article according to Embodiment 2, processing may be carried out on the foam molded article extracted from the mold 100 after the core back step. In the processing, for example, the side face portion 12 of the foam molded article may be cut. Thus, the foam molded article can be processed into a flat plate-like foam molded article constituted by only the bottom portion 11 or a foam molded article having a different height of the side face portion 12 from that of the foam molded article according to Embodiment 1.

EXAMPLES

The present invention will be described more in detail along examples below. The present invention is not limited to only the examples.

(Example 1)

Materials shown in Table 1 were dry-blended at a blending ratio shown in Table 1, and kneaded at a set temperature of 220°C by use of a two-axis extruder ("TEX30" made by The Japan Steel Works, Ltd.) to thereby obtain a pellet-like foaming resin composition.

[Table 1]

| Compound name | | Manufacturer | Grade | Blending ratio |
|---|---|---|---|---|
| Polypropylene | | Prime Polymer Co., Ltd. | J106G | 50 wt% |
| Polylactic acid | | Unitika Ltd. | Terramac TE-2000 | 25 wt% |
| Acid-modified polyolefin | | Prime Polymer Co., Ltd. | ZP648 | 10 wt% |
| Layered silicate | Talc | Nippon Talc Co., Ltd. | P-3 | 15 wt% |

The pellet-like foaming resin composition obtained thus was thrown into an injection molding machine (made by Toshiba Machine Co., Ltd.) mounted with a supercritical generating apparatus, so as to be melted in a cylinder set at a temperature 240°C while a supercritical fluid of nitrogen ($N_2$) was mixed into the obtained molten resin under the conditions of a filling amount of 0.3% by weight and a filling pressure of 16 MPa. Incidentally, the filling amount (unit: % by weight) of the critical fluid can be calculated by the following expression (4):

$$\text{filling amount (unit: \% by weight) of supercritical fluid} = [(\text{flow rate of supercritical fluid} \times \text{flow-in time of supercritical fluid} \times \text{conversion factor } 27.8) / \text{weight of foaming resin composition}] \times 100 \qquad (4)$$

A mold used as the mold to which the molten resin was to be injected did not include a third region forming a curved face portion but included the first region 111 forming a bottom portion of a foam molded article and the second region 112 forming a side face portion of the foam molded article, so as to form the cavity 110, as shown in Fig. 9. The mold included a concave mold on the fixed side and a convex mold on the movable side, and the cavity before core back had a shape shown in the following Table 2.

The molten resin to which the supercritical fluid had been mixed was injected into the cavity of the mold under the conditions of an injection speed of 100 mm/sec and a screw back pressure of 15 MPa. The mold temperature was set at 45°C. Core back was carried out at a timing immediately after the completion of the injection of the molten resin to the cavity. Specifically, the female mold of the mold was moved back at a core back speed of 0.3 mm/sec to expand the volume of the cavity to thereby accelerate foaming of the molten resin. The cavity after the core back had a shape shown in the following Table 3. After the molten resin was completely solidified, the foam molded article was extracted. The obtained foam molded article is a foam molded article which did not include a curved face portion but included the bottom portion 11 and the side face portion 12 and in which the bottom surface of the bottom portion 11 is a flat surface. In addition, the planar shape of the bottom portion 11 was a circle. The obtained foam molded article had a shape shown in the following Table 4. The thickness of the bottom portion 11 was an average value of thicknesses at 10 places selected at random.

(Examples 2 to 9 and Comparative Examples 1 to 8)

A molten resin similar to that in Example 1 was used to produce a foam molded article according to each of the following Examples and Comparative Examples. In each example, the cavity had a shape shown in the following Table 2 before core back, and had a shape shown in the following Table 3 after the core back. The obtained foam molded article had a shape shown in the following Table 4. Incidentally, a dash is added to each of the signs designating dimensions before core back in order to easily distinguish the dimensions before and after the core back from each other in Table 2 and Table 3. In addition, supercritical injection molding was performed in the same manner as in Example 1, except that the core back amount was set as Table 3, and the core back speed was adjusted within a range of 0.5 mm/sec or lower.

In each of Examples 2 to 6 and Comparative Examples 1 to 3 and 5 to 8, a foam molded article was produced by use of the mold shown in Fig. 9 and in the same manner as in Example 1. The foam molded article did not have a curved face portion but had the bottom portion 11 and the side face portion 12, and the bottom surface of the bottom portion 11 was a flat surface, as shown in Fig. 1 and Fig. 2,. The planar shape of the bottom portion 11 was a circle.

In Example 7, a foam molded article had the bottom portion 11, the side face portion 12 and the curved face portion 13, and the bottom surface of the bottom portion 11 was a curved surface curved on the side where the side face portion 12 was disposed. The planar shape of the bottom portion 11 was a circle.

In Example 8, a foam molded article was produced by use of the mold shown in Fig. 10. The foam molded article had the bottom portion 11, the side face portion 12 and the curved face portion 13, and the bottom surface of the bottom portion 11 was a flat surface, as shown in Fig. 4 and Fig. 5. The planar shape of the bottom portion 11 was a circle.

In Example 9, a foam molded article did not have a curved face portion but had the bottom portion 11 and the side face portion 12, and the bottom surface of the bottom portion 11 was a curved surface curved on the side where the side face portion 12 was disposed, as shown in Fig. 3. The planar shape of the bottom portion 11 was a circle.

In Comparative Example 4, a foam molded article like a flat plate was produced by use of a flat plate-like mold which did not have any side face portion and any curved face portion.

[Table 2]

| | Shape of cavity before core back | | | | | | | |
|---|---|---|---|---|---|---|---|---|
| | Shape of first region | Existence of second region | Existence of third region | Thickness $T_2'$ of first region (mm) | Length $C'$ (mm) | Diameter $D'$ of first region (mm) | $D'/3 \leq C' \leq 3D'$ | Angle $\theta 2$ between first region and second region (°) |
| Example 1 | Flat | Present | Absent | 1.2 | 20 | 60 | Compatible | 60 |
| Example 2 | Flat | Present | Absent | 3.0 | 100 | 60 | Compatible | 85 |
| Example 3 | Flat | Present | Absent | 1.2 | 60 | 20 | Compatible | 80 |
| Example 4 | Flat | Present | Absent | 0.5 | 20 | 60 | Compatible | 60 |
| Example 5 | Flat | Present | Absent | 2.0 | 30 | 75 | Compatible | 45 |
| Example 6 | Flat | Present | Absent | 3.5 | 30 | 60 | Compatible | 80 |
| Example 7 | Curved | Present | Present | 0.5 | 20 | 25 | Compatible | 85 |
| Example 8 | Flat | Present | Present | 0.5 | 20 | 25 | Compatible | 85 |
| Example 9 | Curved | Present | Absent | 0.5 | 28 | 25 | Compatible | 85 |
| Comp. 1 | Flat | Present | Absent | 1.2 | 17 | 60 | $D'/3 > C'$ | 60 |
| Comp. 2 | Flat | Present | Absent | 0.3 | 105 | 60 | Compatible | 85 |
| Comp. 3 | Flat | Present | Absent | 1.2 | 64 | 20 | $C' > 3D'$ | 80 |
| Comp. 4 | Flat | Absent | Absent | 1.2 | - | 60 | - | 0 |
| Comp. 5 | Flat | Present | Absent | 2.0 | 71 | 60 | Compatible | 30 |

(continued)

| | Shape of cavity before core back | | | | | | | |
|---|---|---|---|---|---|---|---|---|
| | Shape of first region | Existence of second region | Existence of third region | Thickness $T_2'$ of first region (mm) | Length C' (mm) | Diameter D' of first region (mm) | D'/ $3 \leq C' \leq 3D'$ | Angle $\theta 2$ between first region and second region (°) |
| Comp. 6 | Flat | Present | Absent | 1.2 | 71 | 20 | C'>3D' | 80 |
| Comp. 7 | Flat | Present | Absent | 0.3 | 21 | 60 | Compatible | 80 |
| Comp. 8 | Flat | Present | Absent | 2.0 | 32 | 15 | Compatible | 80 |

[Table 3]

| | Shape of cavity after core back | | | | | | | | Core back amount (mm) |
|---|---|---|---|---|---|---|---|---|---|
| | Shape of first region | Existence of second region | Existence of third region | Thickness $T_2$ of first region (mm) | Length C (mm) | Diameter D of first region (mm) | $D/3 \leq C \leq 3D$ | Angle $\theta 2$ between first region and second region (°) | |
| Example 1 | Flat | Present | Absent | 8.3 | 28 | 60 | Compatible | 60 | 8 |
| Example 2 | Flat | Present | Absent | 12.8 | 115 | 60 | Compatible | 85 | 12 |
| Example 3 | Flat | Present | Absent | 4.0 | 60 | 20 | Compatible | 80 | 6 |
| Example 4 | Flat | Present | Absent | 3.2 | 24 | 60 | Compatible | 60 | 4 |
| Example 5 | Flat | Present | Absent | 9.5 | 39 | 75 | Compatible | 45 | 8 |
| Example 6 | Flat | Present | Absent | 8.1 | 36 | 60 | Compatible | 80 | 6 |
| Example 7 | Curved | Present | Present | 3.9 | 24 | 25 | Compatible | 85 | 5 |
| Example 8 | Flat | Present | Present | 4.2 | 25 | 25 | Compatible | 85 | 5 |
| Example 9 | Curved | Present | Absent | 4.3 | 33 | 25 | Compatible | 85 | 5 |
| Comp. 1 | Flat | Present | Absent | 7.8 | 17 | 60 | D/3>C | 60 | 8 |
| Comp. 2 | Flat | Present | Absent | 0.9 | 105 | 60 | Compatible | 85 | 12 |
| Comp. 3 | Flat | Present | Absent | 1.9 | 64 | 20 | C>3D | 80 | 1 |
| Comp. 4 | Flat | Absent | Absent | 5.8 | - | 60 | - | 0 | 6 |
| Comp. 5 | Flat | Present | Absent | 10.2 | 71 | 60 | Compatible | 30 | 10 |
| Comp. 6 | Flat | Present | Absent | 3.9 | 71 | 20 | C>3D | 80 | 6 |
| Comp. 7 | Flat | Present | Absent | 0.8 | 21 | 60 | Compatible | 80 | 6 |
| Comp. 8 | Flat | Present | Absent | 2.4 | 32 | 15 | Compatible | 80 | 6 |

As for each of the foam molded articles according to Examples and Comparative Examples, the layer structure of the bottom portion and the presence/absence of swelling in the bottom portion were checked. In addition, the adiabaticity and the shock resistance were evaluated by the following methods. The evaluation results are shown in Table 4.

<Layer Structure of Bottom Portion>

Each of the foam molded articles according to Examples and Comparative Examples was cut on a plane perpendicular to the bottom portion, and a cross-section of the bottom portion was observed. A scanning electron microscope ("S-4800" made by Hitachi High-Tech Corporation) was used for the observation of the cross-section. In Table 4, "5-layer" designates a case where the cross-section of the bottom portion had a five-layer structure, that is, a skin-layer/foam-layer/belt-like-resin-layer/foam-layer/skin-layer structure, and "3-layer" designates a case where the cross-section of the bottom portion had a three-layer structure, that is, a skin-layer/foam-layer/skin-layer structure. The foam molded article in which the cross-section of the bottom portion had five layers was regarded as compatible with a foam molded article of the invention.

<Presence/Absence of Swelling in Bottom Portion>

Each of the foam molded articles according to Examples and Comparative Examples was observed visually to check whether swelling occurred or not at the center of the bottom portion. The foam molded article in which the difference in thickness between the thickest part and the thinnest part in the bottom portion was below 0.6 mm was evaluated as ○. The foam molded article in which the difference in thickness was 0.6 mm or more and less than 1.0 mm was evaluated as Δ. The foam molded article in which the difference in thickness exceeded 1.0 mm was evaluated as ×.

<Adiabaticity>

One side of each of the foam molded articles according to Examples and Comparative Examples was sprayed with a black body spray ("THI-1B" made by Tasco Japan Co., Ltd.), and then left as it was in a room for 12 hours or more and 24 hours or less to thereby dry a solvent contained in the black body spray. Thus, a test sample colored in black was produced. The test sample was floated on 100 ml of hot boiled water so that the surface colored in black faced upward. After three minutes had passed, the surface temperature of the surface colored in black in the test sample was measured. The surface temperature was measured by an infrared radiation thermometer ("TVS-200" made by Nippon Avionics Co., Ltd.) with emissivity adjusted to 0.94. The foam molding article in which the surface temperature was 60°C or lower was evaluated as ○○. The foam molding article in which the surface temperature was 60°C or higher and 65°C or lower was evaluated as ○. The foam molding article in which the surface temperature was 65°C or higher was evaluated as ×.

<Shock Resistance>

Each of the foam molded articles according to Examples and Comparative Examples was made to stand still on a flat surface, and a glass ball having a diameter of 15 mm and a weight of 4.5 g was made to fall thereon from a height of 1 m. The glass ball was made to fall on each foam molded article three times, and the condition of the foam molded article after the glass ball was made to fall thereon three times was observed visually. The foam molded article which was not broken was evaluated as ○, and the foam molded article which was broken was evaluated as ×.

[Table 4]

| | Shape of foam molded article | | | | | | | | | evaluation | | |
|---|---|---|---|---|---|---|---|---|---|---|---|---|
| | Shape of bottom portion | Existence of side face portion | Existence of curved face portion | Thickness $T_1$ of bottom portion (mm) | Length A (mm) | Diameter B of bottom portion (mm) | B/3≤A≤3B | Angle θ1 between bottom portion and side face portion (°) | Layer structure of bottom portion | Swelling in center portion | Adiabaticity | Shock resistance |
| Example 1 | Flat | Present | Absent | 8.3 | 28 | 60 | Compatible | 60 | 5-layer | ○ | ○○ | ○ |
| Example 2 | Flat | Present | Absent | 12.8 | 115 | 60 | Compatible | 85 | 5-layer | ○ | ○○ | ○ |
| Example 3 | Flat | Present | Absent | 4.0 | 60 | 20 | Compatible | 80 | 5-layer | ○ | ○ | ○ |
| Example 4 | Flat | Present | Absent | 3.2 | 24 | 60 | Compatible | 60 | 5-layer | ○ | ○ | ○ |
| Example 5 | Flat | Present | Absent | 9.5 | 39 | 75 | Compatible | 45 | 5-layer | ○ | ○○ | ○ |
| Example 6 | Flat | Present | Absent | 8.1 | 36 | 60 | Compatible | 80 | 5-layer | Δ | ○ | ○ |
| Example 7 | Curved | Present | Present | 3.9 | 24 | 25 | Compatible | 85 | 5-layer | ○ | ○ | ○ |
| Example 8 | Flat | Present | Present | 4.2 | 25 | 25 | Compatible | 85 | 5-layer | ○ | ○ | ○ |
| Example 9 | Curved | Present | Absent | 4.3 | 33 | 25 | Compatible | 85 | 5-layer | ○ | ○ | ○ |
| Comp. 1 | Flat | Present | Absent | 7.8 | 17 | 60 | B/3>A | 60 | 5-layer | × | ○○ | ○ |
| Comp. 2 | Flat | Present | Absent | 0.9 | 105 | 60 | Compatible | 85 | 3-layer | ○ | × | × |
| Comp. 3 | Flat | Present | Absent | 1.9 | 64 | 20 | A>3B | 80 | 3-layer | ○ | × | × |
| Comp. 4 | Flat | Absent | Absent | 5.8 | - | 60 | - | 0 | 5-layer | × | ○○ | ○ |
| Comp. 5 | Flat | Present | Absent | 10.2 | 71 | 60 | Compatible | 30 | 5-layer | × | ○○ | ○ |

EP 3 738 741 A1

17

| | Shape of foam molded article | | | | | | | | Layer structure of bottom portion | evaluation | | |
|---|---|---|---|---|---|---|---|---|---|---|---|---|
| | Shape of bottom portion | Existence of side face portion | Existence of curved face portion | Thickness $T_1$ of bottom portion (mm) | Length A (mm) | Diameter B of bottom portion (mm) | $B/3 \leq A \leq 3B$ | Angle $\theta 1$ between bottom portion and side face portion (°) | | Swelling in center portion | Adiabaticity | Shock resistance |
| Comp. 6 | Flat | Present | Absent | 3.9 | 71 | 20 | A>3B | 80 | 3-layer | ○ | × | × |
| Comp. 7 | Flat | Present | Absent | 0.8 | 21 | 60 | Compatible | 80 | 3-layer | ○ | × | × |
| Comp. 8 | Flat | Present | Absent | 2.4 | 32 | 15 | Compatible | 80 | 3-layer | ○ | × | × |

Each of the foam molded articles obtained in Examples 1 to 9 had a five-layer structure, and was light in weight and excellent in adiabaticity and shock resistance. In each of the foam molded articles according to Examples 1 to 9, occurrence of swelling was inhibited. In Example 6, slight swelling was observed in the surface of the bottom portion of the foam molded article, but it gave no influence to the adiabaticity and the shock resistance of the foam molded article. In each of Examples 1, 2 and 5, it was considered that the adiabaticity was more improved due to the large thickness of the foam molded article and the high expansion ratio in addition to the inhibition of occurrence of swelling.

In Comparative Example 1 where B/3>A, Comparative Example 4 which did not have a side face portion and Comparative Example 5 where the angle between the bottom portion and the side face portion was below 40°, it was considered that swelling occurred at the center portion of the bottom portion due to insufficient formation of the foam layers and/or the belt-like resin layer in an end portion of the bottom portion. In Comparative Examples 2, 3 and 7 where the thickness of the bottom portion was below 2.0 mm, the thickness of the bottom portion was too thin to form the belt-like resin layer, so that the three-layer structure was formed. In Comparative Examples 3 and 6 where A>3B, the height of the side face portion was so high as to increase the difference in the timing when the molten resin was solidified, between the bottom portion side and the end portion side in the side face portion. Thus, a wrinkle occurred in the surface of the side face portion. In Comparative Example 8 where the diameter of the bottom portion was below 20 mm, it was considered that the foaming force in the bottom portion was too small to form the belt-like resin layer so that the three-layer structure was formed.

REFERENCE SIGNS LIST

| | |
|---|---|
| 1: | first skin layer |
| 2: | first foam layer |
| 3: | belt-like resin layer |
| 4: | second foam layer |
| 5: | second skin layer |
| 10A, 10B, 10C, 10D: | foam molded article |
| 11: | bottom portion |
| 12: | side face portion |
| 13: | curved face portion |
| 21: | hopper |
| 22: | heating cylinder |
| 23: | screw |
| 24: | nozzle |
| 25: | gas cylinder |
| 26: | supercritical fluid generating portion |
| 27: | injection control portion |
| 40: | molten resin |
| 100,100A,100B: | mold |
| 101: | male mold |
| 102: | female mold |
| 103: | runner |
| 104: | resin injection port |
| 110: | cavity |
| 111: | first region of cavity |
| 112: | second region of cavity |
| 113: | third region of cavity |
| 200: | supercritical injection molding apparatus |

**Claims**

**1.** A foam molded article comprising a bottom portion and a side face portion, wherein:

the bottom portion has a cross-section including a first skin layer, a first foam layer, a belt-like resin layer, a second foam layer and a second skin layer in this order;
the bottom portion has a diameter of 20 mm or more;

the bottom portion has a thickness of 2.0 mm or more;
an angle between the bottom portion and the side face portion is 40° or more and 89° or less; and
the following expression (1) is satisfied:

$$B/3 \leq A \leq 3B \qquad (1)$$

wherein A represents a length between an opposite surface of the bottom portion to a side where the side face portion is disposed and an upper end of the side face portion, and B represents the diameter of the bottom portion.

2. The foam molded article according to Claim 1, further comprising a curved face portion that is provided between the bottom portion and the side face portion.

3. A method for producing a foam molded article, comprising:

a step of injecting a molten resin into a cavity inside a mold; and
a step of moving a part of the mold to thereby expand a volume of the cavity before the molten resin injected into the cavity finishes to be solidified, wherein
the cavity comprises a first region that molds a bottom portion of a foam molded article, and a second region that molds a side face portion of the foam molded article, and
in the cavity whose volume has been expanded:

the first region has a diameter of 20 mm or more;
the first region has a thickness of 2.0 mm or more;
an angle between the first region and the second region is 40° or more and 89° or less; and
the following expression (2) is satisfied:

$$D/3 \leq C \leq 3D \qquad (2)$$

wherein C represents a length between an opposite surface of the first region to a side where the second region is disposed and an end portion of the second region, and D represents the diameter of the first region.

4. The method for producing a foam molded article according to Claim 3, wherein the cavity further comprises a third region that forms a curved face portion of the foam molded article, the third region being provided between the first region and the second region.

*FIG.1*

*FIG.2*

*FIG.3*

*FIG.4*

*FIG.5*

*FIG.6*

*FIG.7*

Y

Y′

*FIG.8*

(a)

40

103  24

101 110104 102

(b)

40

103  24

101  110 104 102

*FIG.9*

100A

C

112 } 110

T₂  104  103

θ2

111

D

*FIG.10*

*FIG.11*

*FIG.12*

## INTERNATIONAL SEARCH REPORT

International application No.

PCT/JP2109/000719

### A. CLASSIFICATION OF SUBJECT MATTER

Int.Cl. B29C44/00(2006.01)i, B29C45/00(2006.01)i, B29C45/26(2006.01)i, B29C45/70(2006.01)i, B32B5/18(2006.01)i

According to International Patent Classification (IPC) or to both national classification and IPC

### B. FIELDS SEARCHED

Minimum documentation searched (classification system followed by classification symbols)
Int.Cl. B29C44/00, B29C45/00, B29C45/26, B29C45/70, B32B5/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-328297 A (SONY CORP.) 24 November 2005, claims, examples, drawings (Family: none) | 1<br>1, 3 |
| X<br>Y | WO 2017/073165 A1 (BANDO CHEMICAL INDUSTRIES, LTD.) 04 May 2017, claims, paragraphs [0018]-[0019], [0030]-[0032], [0055], examples, drawings & US 2018/0304510 A1 claims, paragraphs [0027]-[0028], [0039]-[0041], [0064], examples, drawings | 1, 3<br>1-4 |
| X<br>Y | JP 2017-94538 A (BANDO CHEMICAL INDUSTRIES, LTD.) 01 June 2017, claims, paragraphs [0037]-[0039], [0045]-[0050], [0054], examples, drawings (Family: none) | 1, 3<br>1-4 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 March 2019 (04.03.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 3 738 741 A1**

**INTERNATIONAL SEARCH REPORT**

| International application No. |
| --- |
| PCT/JP2109/000719 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | WO 2017/104217 A1 (BANDO CHEMICAL INDUSTRIES, LTD.) 22 June 2017, claims, paragraph [0002], examples, drawings & EP 3392014 A1 claims, paragraph [0002], examples, drawings | 2, 4 |
| A | WO 2010/029754 A1 (KOMATSU, Michio) 18 March 2010, entire text & US 2011/0171406 A1 entire text | 1–4 |
| A | JP 2001–18943 A (GRAND POLYMER KK) 23 January 2001, entire text (Family: none) | 1–4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005059224 A